# EUROPÄISCHE PATENTANMELDUNG

(11) **EP 2 620 655 A1**
(43) Veröffentlichungstag der Anmeldung: **31.07.2013**
(21) Anmeldenummer: 12152999.4
(22) Anmeldetag: 30.01.2012
(51) Int. Cl.: F15B 7/00, F01D 17/26, F16K 31/124

(54) **Antriebssystem für ein Ventil**

(71) Anmelder: Siemens Aktiengesellschaft, 80333 München (DE)
(72) Erfinder: Kahl, Jan, 53804 Much (DE)

(57) **Zusammenfassung**

Die Erfindung betrifft Antriebssystem (1) für ein Ventil (2), wobei ein Ventilkörper (4) des Ventils (2) über eine Pumpe direkt gesteuert wird und die Pumpe drehzahlgeregelt ausgebildet ist.

## Beschreibung

Die Erfindung betrifft ein Antriebssystem umfassend ein Ventil mit einem über pneumatische oder hydraulische Antriebskräfte antreibbaren Ventilkörper und einer Fluid-Volumenstromquelle zum Erzeugen der Antriebskraft.

Ventile werden in verschiedenen technischen Gebieten eingesetzt. Beispielsweise werden in Kraftwerken, bei denen ein Kreislauf ausgebildet ist, Ventile eingesetzt, um den Zufluss eines Strömungsmediums zu regeln bzw. zu steuern. In Dampfkraftwerken wird beispielsweise ein unter Druck stehendes Dampfvolumen in einem Dampferzeuger generiert und über geeignete Leitungen zu einer Dampfturbine geführt. In solch einer Dampfturbine wird die thermische Energie des Dampfes in eine mechanische Rotationsenergie umgewandelt, die in einem an die Dampfturbine drehmomentgekoppelten Generator schließlich in elektrische Energie umgewandelt wird. Die Rotationsfrequenz des Rotors der Dampfturbine sollte bei konstanten Drehzahlen liegen. Üblicher Weise liegen die Drehzahlen bei 50Hz, wobei andere Drehzahlen, wie z.B. 60Hz vorkommen können. Somit muss der Zufluss des Dampfes zur Dampfturbine geregelt werden. Ein zu großer Dampfmassenstrom würde die Drehzahl der Dampfturbine unerwünscht erhöhen. Daher werden Ventile eingesetzt, die den Zufluss des Dampfes zu einer Dampfturbine regeln.

Ein solches Ventil umfasst in der Regel ein Gehäuse und einen Ventilkörper, der in einer Richtung bewegbar ist und somit einen wirksamen Querschnitt verändert, wodurch sich die Volumenmenge regulieren lässt. Solche Ventile sind im Dampfkraftwerksbau vergleichsweise groß ausgebildet. Die Gewichte solcher Ventile können mehrere Tonnen betragen. Der Ventilkörper weist ebenso ein vergleichsweise hohes Gewicht auf und muss über geeignete Antriebskräfte bewegbar ausgebildet werden. Mögliche Antriebskräfte sind elektrische, pneumatische Kräfte oder hydraulische Kräfte. Der Einsatz von elektro-mechnisch betriebenen Antrieben ist im heutigen Dampfkraftwerksbau nicht ausgeprägt, da die zu übertragenden Kräfte zu hoch sind. Daher werden vorwiegend hydraulische bzw. pneumatische Antriebe zur Übertragung von Kräften eingesetzt. Hierbei wird der nötige Druck und Volumenstrom des hydraulischen bzw. pneumatischen Fluids im Antrieb durch Steuerventile gesteuert, wodurch der Antrieb das Ventil verfahren kann. Über die Pumpen wird ein Druck in den Leitungen aufgebaut, der zu einer Antriebskraft des Ventilkörpers führt. Über den Volumenstrom bzw. Druck in den Leitungen kann somit die Antriebskraft zum Ventilkörper gesteuert werden.

Derzeit werden solche Antriebseinheiten derart ausgebildet, dass eine Pumpe mit einer konstanten Drehzahl einen konstanten Druck aufbaut und der Druck über Steuerventile in den Leitungen geregelt wird. Somit wird die Antriebskraft über die Steuerventile geregelt.

Die Erfindung hat es sich zur Aufgabe gemacht, ein solch bestehendes Antriebskonzept zu verbessern.

Erfindungsgemäß wird dies dadurch erreicht, dass ein Antriebssystem umfassend ein Ventil mit einem über pneumatische oder hydraulische Antriebskräfte antreibbaren Ventilkörper und einer Fluid-Volumenstromquelle zum Erzeugen der Antriebskraft derart ausgebildet ist, dass die Fluid-Volumenstromquelle so gestaltet ist, dass der Ventilkörper über die Fluid-Volumenstromquelle antreibbar ist. Das bedeutet, dass der Druck der zur Erzeugung der Antriebskraft benötigt wird, direkt von der Fluid-Volumenstromquelle geregelt wird. Dadurch können die Steuerventile, die bisher eingesetzt wurden gänzlich weggelassen werden. Durch das Weglassen der Steuerventile verschwindet auch ein Bauteil im Kraftwerk, das einen Ausfall erleiden kann. Dadurch kann eine Störquelle im Gesamtkraftwerk weniger entstehen.

Gelöst wird diese Aufgabe durch den Patentanspruch 1. Weitere vorteilhafte Weiterbildungen sind in den Unteransprüchen angegeben. Die Erfindung geht von dem Gedanken aus, dass auf Ventile gänzlich verzichtet werden kann, wenn eine regelbare Volumenstromquelle eingesetzt wird, die derart ausgebildet ist, dass die Antriebskräfte des Ventilkörpers wirksam geändert werden können.

Somit ist in einer ersten vorteilhaften Weiterbildung die Fluid-Volumenstromquelle regelbar ausgebildet.

In einer weiteren vorteilhaften Weiterbildung ist die Fluid-Volumenstromquelle als drehzahlvariable Pumpe ausgebildet. Die Pumpe kann somit über einen Servomotor angesteuert werden, der die Drehzahl in einfacher Weise verändert und sich die Antriebskräfte leicht verändern lassen können.

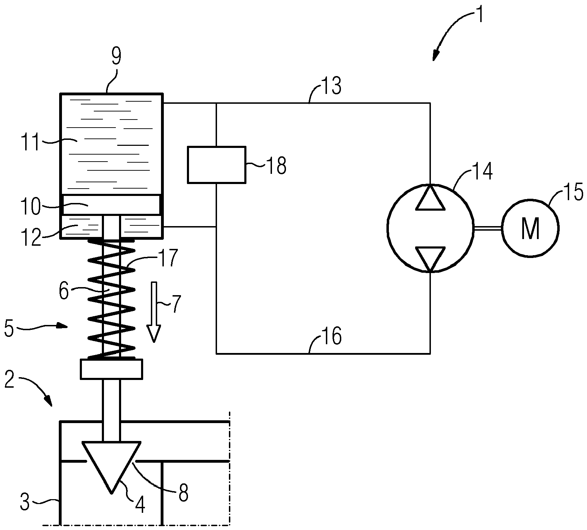

Ausführungsbeispiele werden nachfolgend anhand der Zeichnung im Vergleich zum Stand der Technik, welcher zum Teil ebenfalls dargestellt ist, beschrieben. Die Zeichnung soll die Ausführungsbeispiele nicht maßgeblich darstellen, vielmehr ist die Zeichnung zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Im Einzelnen zeigt die Zeichnung in
- Figur 1: eine schematische Übersicht eines Antriebssystems.

Das Antriebssystem 1 weist ein Ventil 2 auf, das im Wesentlichen ein Ventilgehäuse 3 und einen Ventilkörper 4 umfasst. Dieser Ventilköper wird über einen Antrieb 5 bewegt. Dieser Antrieb 5 weist eine Ventilspindel 6 auf, die in einer Richtung 7 beweglich angeordnet ist. Durch die Bewegung der Ventilspindel 6 bewegt sich ein als Kegel ausgebildeter Ventilkörper 4 gegen einen Ventilsitz 8. Zwischen dem Ventilkörper 4 und dem Ventilsitz 8 kann ein Strömungsmedium, wie z.B. Dampf in einem Dampfkraftwerk strömen. Die Ventilspindel 6 mündet in einen Kolbenraum 9, der durch einen mit der Ventilspindel 6 verbundenen Kolben 10 in einen Zuflussraum 11 und einem Abflussraum 12 getrennt wird. Dieser Zuflussraum 11 ist mit einer Zuflussleitung 13 strömungstechnisch mit einer regelbaren Volumenstromquelle 14 verbunden. Diese Volumenstromquelle 14 kann als Pumpe ausgebildet sein und ist mit einem Servomotor 15 drehmomentübertragend gekoppelt. Der Servomotor 15 regelt bzw. steuert die Drehzahl der Volumenstromquelle 14 derart, dass der Zufluss in der Zuflussleitung 13 in den Zuflussraum 12 im Wesentlichen von dem Servomotor 15 gesteuert wird. Ein Ventil in der Zuflussleitung 13, wie das gemäß dem Stand der Technik bisher eingesetzt wurde, wobei die Volumenstromquelle 14 nicht drehzahlgesteuert war, kann daher gänzlich entfallen. Somit wird über elektrische Ansteuerungssignale der Antrieb 5 direkt angesteuert. Da ein Vergrößern des Zuflussraumes 12 zu einer Verkleinerung des Abflussraumes 12 führt, ist eine Abflussleitung 16 an einem Ausgang des Abflussraumes strömungstechnisch mit der Volumenstromquelle 14 verbunden.

Die Bewegung der Ventilspindel 6 erfolgt gegen eine Feder 17, die dadurch gespannt wird. In einem Störfall, bei dem das Ventil 2 schnell schließen muss, wird über eine Logik 18 die Zuflussleitung 13 mit der Abflussleitung 16 strömungstechnisch miteinander gekoppelt, so dass mittels der potentiellen Energie der Feder 17 das Ventil 2 geschlossen wird. Die Logik 18 könnte in einer einfachen Ausführungsform ein Öffnungs/Schließventil sein, das in einem Störfall ein Signal erhält, zu öffnen.

Die Volumenstromquelle 14 ist für pneumatische oder hydraulische Einsatzgebiete ausgebildet. Durch das Pumpen der Volumenstromquelle 14 wird die Antriebskraft auf die Ventilspindel 6 erzeugt. Dazu ist die Volumenstromquelle 14 regelbar ausgebildet. Die Volumenstromquelle 14 kann als drehzahlvariable Pumpe ausgebildet sein.

## Patentansprüche

1. Antriebssystem (1) umfassend ein Ventil (2) mit einem über pneumatische oder hydraulische Antriebskräfte antreibbaren Ventilkörper (4) und einer Fluid-Volumenstromquelle (14) zum Erzeugen der Antriebskraft, **dadurch gekennzeichnet, dass**
die Fluid-Volumenstromquelle (14) derart ausgebildet ist, dass der Ventilkörper (4) über die Fluid-Volumenstromquelle (14) antreibbar ist.

2. Antriebsystem (1) nach Anspruch 1,
wobei die Fluid-Volumenstromquelle (14) regelbar ausgebildet ist.

3. Antriebsystem (1) nach Anspruch 1 oder 2,
wobei die Fluid-Volumenstromquelle (14) als drehzahlvariable Pumpe ausgebildet ist.

4. Antriebsystem (1) nach Anspruch 3,
wobei die drehzahlvariable Pumpe über einen Servomotor ansteuerbar ist.

5. Antriebsystem (1) nach einem der vorhergehenden Ansprüche,
wobei ein Druck auf den Ventilkörper (4) durch die Fluid-Volumenstromquelle (14) zur Erzeugung der Antriebskraft erzeugbar ist und die Bewegung des Ventilkörpers durch die Fluid-Volumenstromquelle (14) steuerbar bzw. regelbar ist.

6. Antriebssystem (1) nach einem der vorhergehenden Ansprüche,
wobei der Ventilkörper (4) gegen eine Feder (17) bewegbar ist.

7. Antriebsystem (1) nach einem der vorhergehenden Ansprüche,
umfassend ein Schnellschlussmechanismus der zum Schließen des Ventils (2) im Störfall ausgebildet ist.
